# EUROPEAN PATENT SPECIFICATION

(11) **EP 2 279 840 B1**
(45) Date of publication and mention of the grant of the patent: **02.09.2015**
(21) Application number: 10170337.9
(22) Date of filing: 21.07.2010
(51) Int. Cl.: B28B 11/24, F26B 21/14, B28B 17/00, C04B 33/30, C04B 33/28, F26B 5/14, F26B 21/00, F26B 21/06

(54) **Method for the manufacture of a ceramic product and plant implementing the method.**
Verfahren zur Herstellung eines keramischen Produkts und Anlage mit dem Verfahren
Procédé pour la fabrication d'un produit céramique et installation appliquant le procédé

(30) Priority: 30.07.2009 IT BO20090507
(43) Date of publication of application: 02.02.2011
(73) Proprietor: Sacmi Cooperativa Meccanici Imola Societa' Cooperativa, 40026 Imola (IT)
(72) Inventor: Mazzanti, Vasco, 40026 Imola (Bologna) (IT)
(74) Representative: Lanzoni, Luciano

(56) References cited:
- EP-A1- 0 533 406
- DE-A1- 2 301 680
- DE-A1- 4 323 709
- US-A- 2 767 484

## Description

This invention relates to a method for the manufacture of a ceramic product, in particular for the manufacture of ceramic sanitaryware.

As is well known in this trade, ceramic sanitaryware (such as washbasins, toilet bowls, bidets and the like) are made by pressure casting a liquid mixture, known as slip, consisting of water, clay and very small quantities of other substances, in moulds made of porous resin.

The mould gives the article of sanitaryware the required shape and the article is then extracted from the mould in a solid, though plastic, form and further processed according to a well-known sequence of steps until it is completely finished. To obtain this product, plants are used which include the mould, of the known type, and which are designed for a type of high pressure casting, in its simplest and most basic form, comprising the following sequence of steps:
- flushing feed circuits with fresh slip;
- filling the mould at an initial pressure;
- forming the product layer with pressure profiles greater than that used for filling;
- emptying excess slip from the mould;
- product consolidation;
- mould opening and removal of the product, and
- if necessary, product positioning in stations for product drying and finishing.

This type of casting, called high pressure casting, allows the product "layer" to be formed in a relatively short time, reducing the overall time required for a product production cycle.

The product just produced and removed from the mould should have enough mechanical strength to support its own weight during extraction from the mould and standing on a supporting surface. Basically, the product is extracted from the mould in a solid but "green" state (still having a water content of between 16 and 19% of its wet weight) and therefore it is still subject to plastic deformation.

Then, sanitaryware article contact with the air (or in a controlled environment) brings about two main changes in the structure/consistency of the article, the first bringing it to an intermediate "leatherhard" state (in which the water content is approximately halved in weight compared to the previous state) and the second, to an almost finished "whitehard" state (in which the water content is further reduced): in these two states, the sanitaryware article is much less subject to plastic deformation.

The product passage from the green state to the whitehard state, that is to say, the drying step, causes contractions in the product due to water loss and, therefore, a reduction in product dimensions.

These contractions during drying may result in high tensions on some parts of the product and, in extreme cases, may cause cracks.

Such tensions may be generated by the difference in humidity along the layer formed, or by particular angles or radii formed on the product drying and where, basically, there are areas with a greater concentration of stresses, that is to say, which do not have enough mechanical strength to withstand peaks in tension greater than the acceptable load. Document DE 43 23 709 discloses a process for drying pre-cast ceramic products in a drying chamber, according to the preamble of claim 1 and a plant according to the preamble of claim 7.

In this solution, uniform drying is accomplished by feeding a liquid (water) to a ventilating device before and during drying so as to add it in the form of mist to the air flow blown into the drying chamber.

Another liquid (oil) is added to this during the drying operation and, owing to its very nature, this settles evenly on the material to be dried: the combination of nebulised oil and water slows down the product drying process on the areas subjected to the direct action of the nebulised liquids and helps even out the product drying so as to prevent stress cracks.

This type of treatment is not free of disadvantages, however, due to the fact that the nebulised liquids are distributed along fixed paths inside the drying chamber: it is therefore necessary to provide protection against (and hence delay) drying on certain parts of the products, which in this case are regular in shape.

On the other hand, in the case of irregularly shaped products, such as toilet bowls, for example, this type of drying treatment could not be used not only because of the more complex shape of the surface but also because of the lack of precision in directing the flow of nebulised liquids at the more delicate parts of the product.

EP 0 533 406-A1 discloses another method to improve drying apparatus.

This invention therefore has for an aim to overcome these disadvantages by providing a method for the manufacture of a ceramic product with which it is possible to eliminate the risks of cracks developing in products removed from moulds rapidly and safely and without excessively affecting conventional operating times.This invention also has for an aim to provide a plant for implementing the method described above. The plant shall be very practical and have structures designed to allow both identification and reduction of the risks of cracks developing in the product removed from the mould, all without adding a large number of components in the plant stations.

These aims are fully achieved by the method and plant according to this invention, as characterized in the claims 1 and 7.

This special procedure, prior to normal drying in air, makes it possible to dry the more critical parts of the product rapidly, and only at certain points, compared to the other product surfaces, that is to say, more rapidly and precisely, in order to avoid stress cracks. In other terms, the drying treatment is accelerated and performed in point-by-point manner.

The technical features of the invention, with reference to the above aims, are clearly described in the claims and its advantages are more apparent from the detailed description which follows, with reference to the accompanying drawings which illustrate a preferred embodiment of the invention provided merely by way of example, and in which:
- Figure 1 is a schematic front view of a first part of a plant for the manufacture of ceramic products in accordance with the method according to this invention, and in particular of a two-part mould;
- Figure 2 is a schematic side view with some parts cut away to better illustrate others, of another part of the plant for the manufacture of ceramic products in accordance with the method according to this invention, and in particular of a ceramic product drying station;
- Figure 3 is a Cartesian diagram of the controlled trend of a step of the method according to this invention.

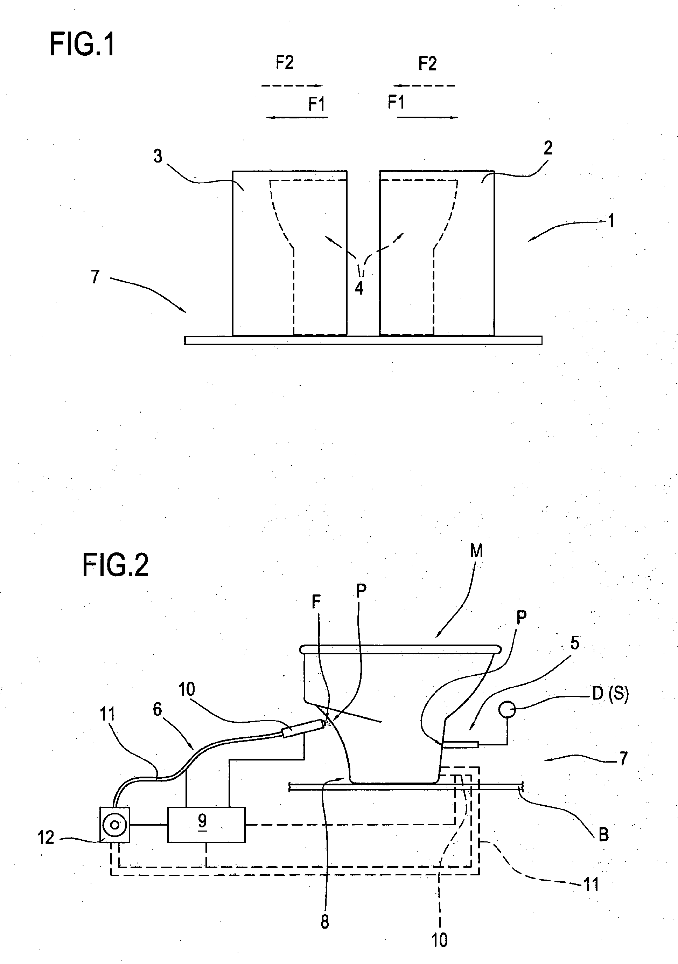

With reference to the accompanying drawings and in particular with reference to Figures 1 and 2, the method according to this invention is used for manufacturing ceramic products, in particular, but without limiting its scope, ceramic sanitaryware (such as washbasins, washbasin columns, toilet bowls, bidets and the like) using a liquid mixture known as slip.

This method is obtained on plants such as that shown in Figures 1 and 2, which obviously only illustrate the parts of main interest in this description.

This plant, labelled 7 as a whole, comprises at least one porous mould 1, for example made of porous resin (Figure 1), comprising at least two parts 2 and 3 which, when joined together form a moulding cavity 4 for the product M and which can be joined together (arrows F2) and moved away from each other (arrows F1) by movement means.

In the case illustrated, by way of example only and without limiting the scope of the invention, the mould 1 forms a toilet bowl M.

This mould 1 has accessory elements, such as ducts for feeding and discharging the slip at predetermined pressures which are connected to a slip tank, and at least one control unit for the product M production cycle which is connected to the slip feed/discharge systems. Said elements are not illustrated, being of the known type and not strictly within the scope of the invention.

In addition, the plant 7 has a supporting and drying station 8 for the product M removed from the mould 1. The station 8 has a base B for supporting the product M. The product is transferred to the station 8 by suitable robotised elements.

The station 8 may also comprise additional product M supporting elements, not illustrated in the accompanying drawings, since they do not strictly fall within the scope of the invention.

The method for manufacturing these ceramic products M comprises the steps of:
- filling the porous mould 1, comprising the two parts 2, 3 joined together to form the cavity 4, with the pressurised slip or fluid mixture, that is to say, at an initial filling pressure;
- forming the product M layer by adding slip at a pressure greater than the initial filling pressure;
- emptying excess slip from the mould 1, lowering the pressure to a value which is normally equal to the ambient pressure;
- opening the parts 2 and 3 of the mould 1 (see Figure 1 and arrows F1);
- removing the product M from the mould 1;
- product M drying, usually in air and in the station 8 where the product M was placed after removal from the mould.

After product M removal from the mould, the method according to the invention comprises:
- identification of one or more points P or areas of the product M which do not match reference parameter D;
- application of a fluid flow F localised around the identified point or points P at a predetermined temperature T and for a predetermined time t, so as to accelerate drying and, therefore, hardening only at that point P or those points P relative to the rest of the surface of the product M.

Basically, the method hinges on product M "point-by-point" drying based on predetermined parameters, to prevent or reduce the risk of cracks developing in the product M, through rapid acceleration of drying accompanied by a rapid increase in hardness. One of the reference parameters for the step of identifying points P or areas is the hardness D detected at the relative point P by means of element 5 (described below).

Another possible parameter which does not form part of the invention is a statistical data item S detected which depends on the product M geometry.

In this latter case, the parameter S is generated from the "history" of each type of product obtained and from its shape which, on each occasion, may have developed cracks at certain points or areas during the drying step and which, therefore, is detected so that it can be treated with the spot drying step.

The fluid flow F can be generated using compressed air applied, using a unit 6, around the point or points P detected for a time t which is between 1 and 100 seconds, and at a temperature T at least equal to the ambient temperature.

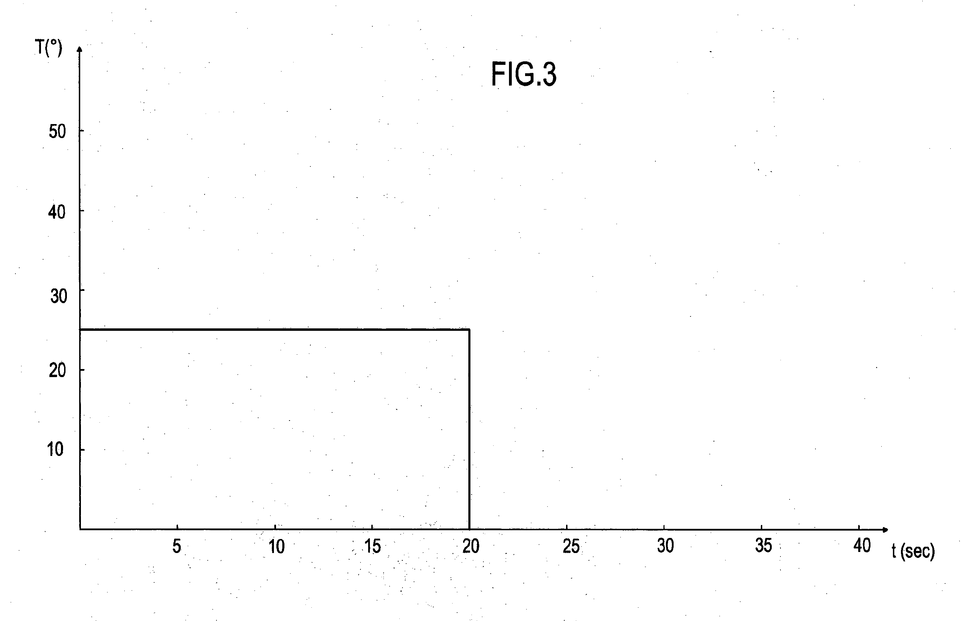

In particular the application time t may be between 5 and 20 seconds, whilst the application temperature T may be between 15 and 40 degrees (see also graph in Figure 3).

Preferably, the flow may also be applied in sequence, alternating air flow intervals with intervals having no air flow.

In other terms, the step of applying the fluid flow F is divided into at least two sub-steps whose total duration falls within the total predetermined application time.

Also according to the invention and as regards the structures implementing the method, the station 8 comprises the unit 6 for generating a fluid flow F under pressure at a controlled temperature T and which may be activated, using respective means 9, for controlled times t.

In other terms, the unit is designed to be positioned close to the at least one or more points P or predetermined areas and to direct the flow F only around those points P or areas.

In addition, the plant 7 comprises an element 5 for measuring the hardness D of the points P or areas of the product M.

This element may be a "penetrometer" or durometer designed to measure the consistency or hardness of any product M risk areas.

The unit 6 for generating the flow of fluid, which, as already indicated, may be compressed air, comprises at least one terminal 10 connected to a duct 11 for the passage of the pressurised fluid which can be fed from a source 12.

Obviously, there may be two or more terminals 10 and ducts 11 depending on the spot drying requirements.

The terminal 10 and the duct 11 may be controlled by programmable means 9 for switching the fluid flow F on and off according to operating requirements (determined for example by the area to be treated, the outside temperature, the extent of the area to be treated, etc.).

Basically, the means 9 can be programmed to control the fluid flow F rate, the flow F emission time t and the temperature T of the fluid emitted.

Devices may be used (such as PLCs or programmable logic controllers) to control the generation of a flow output with high pressures for each area of the part to be treated and, obviously, the timing of the flow emitted (for example using valves) and, if necessary, the air temperature (obviously with relative air heating elements upstream).

A method and a plant designed in this way fulfil the preset aims thanks to the possibility of using a kind of spot drying around the points considered at greatest risk of developing cracks.

The method allows rapid drying (with more rapid hardening) of the areas without affecting the normal operating times of product production cycles.

Similarly, the plant does not require significant structural changes, with the simple addition of the flow generating system and the presence of the system for checking the hardness of points of the product. This reduces the additional cost of the plant against a net improvement in the production of products which significantly reduces the risk of production rejects caused by structural defects.

The invention described above is susceptible of industrial application and may be modified and adapted in several ways without thereby departing from the scope of the inventive concept defined in the claims. Moreover, all the details of the invention may be substituted by technically equivalent elements.

## Claims

1. A method for the manufacture of ceramic products, comprises at least the steps of:
- filling a porous mould (1), comprising at least two parts (2, 3) which are joined together to form at least one moulding cavity (4), with pressurised slip or fluid mixture;
- forming the product (M) layer by adding pressurised slip;
- emptying excess slip from the mould (1);
- opening the parts (2, 3) of the mould (1);
- removing the product (M) from the mould (1);
- after the step of removing the product (M) from the mould the method further comprising the step of identifying one or more points (P) or areas of the product (M) which do not match reference parameters (D, S);
- applying a fluid flow (F) localised around the identified point or points (P) at a predetermined temperature (T) and for a predetermined time (t), so as to accelerate drying and, therefore, hardening only at that point (P) or those points (P) relative to the rest of the surface of the product (M);
- drying the product (M), the method being **characterised in that** one of the reference parameters for the step of identifying the points (P) or areas is the hardness (D) detected at the point (P) by means of element (5).

2. The method according to claim 1, **characterised in that** the fluid flow (F) is compressed air applied, using a unit (6), around the point or points (P) detected for a time (t) which is between 1 and 100 seconds, and at a temperature (T) at least equal to the ambient temperature.

3. The method according to claim 2, **characterised in that** the application time (t) is between 5 and 20 seconds.

4. The method according to claim 2, **characterised in that** the application temperature (T) is between 15 and 40 degrees.

5. The method according to clam 2, **characterised in that** the step of applying the fluid flow (F) is divided into at least two sub-steps whose total duration falls within the total predetermined application time.

6. A plant for the manufacture of ceramic products according to the method of claims 1 to 5, the plant (7) comprising at least one station (8) for supporting and drying the product (M) removed from the mould (1), at least one unit (6) in the station (8), for generating a localised fluid flow (F) under pressure at a controlled temperature (T) and which may be activated, using respective means (9), for controlled times (t), the unit (6) being designed to be positioned close to the at least one or more points (P) or predetermined areas and to direct the flow (F) only around those points (P) or areas; the plant being **characterised in that** it comprises, an element (5) for measuring the hardness (D) of the points (P) or areas of the product (M).

7. The plant according to claim 6, **characterised in that** the unit (6) for generating a flow of fluid comprises at least one terminal (10) connected to a duct (11) for the passage of the pressurised fluid which can be fed from a source (12).

8. The plant according to claim 7, **characterised in that** the terminal (10) and the duct (11) are controlled by programmable means (9) for switching the fluid flow (F) on and off.

9. The plant according to claim 7, **characterised in that** the means (9) can be programmed to control the fluid flow (F) rate, the flow emission time (t) and the temperature (T) of the fluid emitted.

## Patentansprüche

1. Verfahren zur Herstellung keramischer Produkte, umfassend mindestens folgende Schritte:
- Füllen einer porösen Form (1), bestehend aus mindestens zwei Teilen (2, 3), die miteinander verbunden sind, um mindestens einen Formungshohlraum (4) zu bilden, mit einer mit Druck beaufschlagten geschlämmten Tonmasse oder Fluidmischung;
- Formen der Schicht des Produkts (M) durch Hinzufügen von mit Druck beaufschlagter geschlämmter Tonmasse;
- Entleeren überschüssiger geschlämmter Tonmasse aus der Form (1);
- Öffnen der Teile (2, 3) der Form (1) ;
- Herausnehmen des Produkts (M) aus der Form (1);
- nach dem Schritt des Herausnehmens des Produkts (M) aus der Form umfasst das Verfahren zudem einen Schritt zum Identifizieren eines oder mehrerer Punkte (P) oder Bereiche des Produkts (M), die Referenzparametern (D, S) nicht gerecht werden;
- Anwenden eines Fluidstroms (F), lokalisiert rund um den oder die identifizierten Punkt/e (P), bei einer vorgegebenen Temperatur (T) und für eine vorgegebene Zeit (t), sodass die Trocknung und daher die Aushärtung nur an diesem Punkt (P) oder diesen Punkten (P) im Vergleich zur übrigen Oberfläche des Produkts (M) beschleunigt werden;
- Trocknen des Produkts (M), wobei das Verfahren **dadurch gekennzeichnet ist, dass** einer der Referenzparameter für den Schritt des Identifizierens der Punkte (P) oder der Bereichen die Härte (D) ist, die am Punkt (P) mittels des Elements (5) erfasst wird.

2. Verfahren nach Anspruch 1, **dadurch gekennzeichnet, dass** es sich beim Fluidstrom (F) um Druckluft handelt, angewandt unter Nutzung einer Einheit (6) rund um den Punkt oder die Punkte (P), erfasst für eine Zeit (t) zwischen 1 und 100 Sekunden, und bei einer Temperatur (T), die mindestens gleich der Umgebungstemperatur ist.

3. Verfahren nach Anspruch 2, **dadurch gekennzeichnet, dass** die Anwendungszeit (t) zwischen 5 und 20 Sekunden beträgt.

4. Verfahren nach Anspruch 2, **dadurch gekennzeichnet, dass** die Anwendungstemperatur (T) zwischen 15 und 40 Grad beträgt.

5. Verfahren nach Anspruch 2, **dadurch gekennzeichnet, dass** der Schritt des Anwendens des Fluidstroms (F) in mindestens zwei Unterschritte unterteilt ist, deren Gesamtdauer unter die gesamte vorgegebene Anwendungszeit fällt.

6. Anlage zur Herstellung keramischer Produkte nach dem Verfahren nach Anspruch 1 bis 5, wobei die Anlage (7) mindestens eine Station (8) zum Tragen und Trocknen des aus der Form (1) herausgenommenen Produkts (M), mindestens eine Einheit (6) in der Station (8) zum Erzeugen eines lokalisierten Fluidstroms (F) unter Druck bei einer kontrollierten Temperatur (T) umfasst, der unter Nutzung jeweiliger Mittel (9) für kontrollierte Zeiten (t) aktiviert werden kann, wobei die Einheit (6) ausgestaltet ist, um nah an dem mindestens einen oder mehreren Punkten (P) oder vorgegebenen Bereichen positioniert zu werden und um den Strom (F) nur rund um diese Punkte (P) oder Bereiche zu richten, wobei die Anlage **dadurch gekennzeichnet ist, dass** sie ein Element (5) zum Messen der Härte (D) der Punkte (P) oder Bereiche des Produkts (M) umfasst.

7. Anlage nach Anspruch 6, **dadurch gekennzeichnet, dass** die Einheit (6) zum Erzeugen eines Fluidstroms mindestens einen Anschluss (10) umfasst, angeschlossen an eine Leitung (11) für das Durchströmen des mit Druck beaufschlagten Fluids, das von einer Quelle (12) zugeführt werden kann.

8. Anlage nach Anspruch 7, **dadurch gekennzeichnet, dass** der Anschluss (10) und die Leitung (11) durch programmierbare Mittel (9) gesteuert werden, um den Fluidstrom (F) ein- und auszuschalten.

9. Anlage nach Anspruch 7, **dadurch gekennzeichnet, dass** die Mittel (9) programmiert werden können, um den Volumenstrom des Fluidstroms (F), die Stromausgabezeit (t) und die Temperatur (T) des ausgegebenen Fluids zu regeln.

## Revendications

1. Procédé pour la fabrication de produits céramiques, comprenant au moins les étapes suivantes .
- remplir un moule poreux (1) composé d'au moins deux parties (2, 3) accouplées l'une à l'autre pour former au moins une cavité de moulage (4), avec une barbotine sous pression ou un mélange fluide ;
- former la couche de produit (M) en ajoutant une barbotine sous pression ;
- retirer l'excès de barbotine du moule (1) ;
- ouvrir les parties (2, 3) du moule (1) ;
- extraire le produit (M) du moule (1) ;
- après l'étape d'extraction du produit (M) du moule, le procédé comprenant également l'étape d'identifier un ou plusieurs points (P) ou zones du produit (M) qui ne correspondent pas aux paramètres de référence (D, S) ;
- appliquer un flux de liquide (F) localisé autour du point identifié ou des points identifiés (P) à une température prédéterminée (T) et pendant une durée prédéterminée (t), de sorte à accélérer le séchage et, par conséquent, le durcissement uniquement à ce point (P) ou à ces points (P) par rapport au reste de la surface du produit (M) ;
- sécher le produit (M), le procédé étant **caractérisé en ce que** l'un des paramètres de référence pour l'étape d'identification des points (P) ou zones, est la dureté (D) détectée au point (P) au moyen d'un élément (5).

2. Procédé selon la revendication 1, **caractérisé en ce que** le flux de liquide (F) est appliqué par air comprimé à l'aide d'une unité (6), autour du point ou des points (P) détectés, pendant une durée (t) allant de 1 à 100 secondes, et à une température (T) au moins égale à la température ambiante.

3. Procédé selon la revendication 2, **caractérisé en ce que** la durée d'application (t) est comprise entre 5 et 20 secondes.

4. Procédé selon la revendication 2, **caractérisé en ce que** la température d'application (T) est comprise entre 15 et 40 degrés.

5. Procédé selon la revendication 2, **caractérisé en ce que** l'étape d'appliquer le flux de liquide (F) compte au moins deux sous-étapes, dont la durée totale est comprise dans la durée d'application totale prédéterminée.

6. Installation pour la fabrication de produits céramiques selon le procédé des revendications de 1 à 5, l'installation (7) comprenant au moins un poste (8) pour déposer et pour sécher le produit (M) extrait du moule (1), au moins une unité (6) dans le poste (8) pour générer un flux de liquide localisé (F) sous pression à une température contrôlée (T) et pouvant être activée, à l'aide de moyens respectifs (9), pendant des durées contrôlées (t), l'unité (6) étant conçue pour être positionnée près d'au moins l'un ou plusieurs points (P) ou zones prédéterminées et pour diriger le flux (F) uniquement autour de ces points (P) ou zones ; l'installation étant **caractérisée en ce qu'**elle comprend un élément (5) pour mesurer la dureté (D) des points (P) ou zones du produit (M).

7. Installation selon la revendication 6, **caractérisée en ce que** l'unité (6) de génération d'un flux de liquide comprend au moins une extrémité (10) raccordée à un conduit (11) pour le passage du liquide sous pression pouvant être alimenté par une source (12).

8. Installation selon la revendication 7, **caractérisée en ce que** l'extrémité (10) et le conduit (11) sont pilotés par des moyens programmables (9) pour l'activation ou pour la désactivation du flux de liquide (F).

9. Installation selon la revendication 7, **caractérisée en ce que** les moyens (9) peuvent être programmés pour piloter le débit du flux de liquide (F), la durée d'émission du flux (t) et la température (T) du liquide émis.
